# EUROPÄISCHE PATENTSCHRIFT

(11) **EP 2 563 578 B1**
(45) Veröffentlichungstag und Bekanntmachung des Hinweises auf die Patenterteilung: **15.07.2015**
(21) Anmeldenummer: 11715438.5
(22) Anmeldetag: 14.04.2011
(51) Int. Cl.: B30B 3/04, B30B 11/16, F16J 15/32

(54) **DOPPELWELLENANORDNUNG MIT VERSTELLBAREM ACHSABSTAND UND VERBESSERTER DICHTUNGSEINHEIT**
DUAL SHAFT ARRANGEMENT WITH ADJUSTABLE AXIAL SPACING AND IMPROVED SEALING UNIT
ENSEMBLE DOUBLE ARBRE À ENTRAXE RÉGLABLE, DOTÉ D'UNE UNITÉ D'ÉTANCHÉITÉ AMÉLIORÉE

(30) Priorität: 27.04.2010 DE 102010018421
(43) Veröffentlichungstag der Anmeldung: 06.03.2013
(73) Patentinhaber: HOSOKAWA ALPINE Aktiengesellschaft, 86199 Augsburg (DE)
(72) Erfinder: HEINRICHSMEIER, Leonhard, 74388 Talheim (DE); EBERHARDT, Claus, 74193 Schwaigern (DE); ULRICH, Claus, 74182 Obersulm - Suelzbach (DE)
(74) Vertreter: Beyer, Andreas
(86) Internationale Anmeldenummer: PCT/EP2011/001903
(87) Internationale Veröffentlichungsnummer: WO 2011/134606

(56) Entgegenhaltungen:
- EP-A1- 0 363 975
- EP-A1- 1 826 466
- FR-A1- 2 336 613
- GB-A- 2 416 815
- US-A- 3 280 426
- US-A- 3 941 396
- US-A- 4 588 195

## Beschreibung

Die vorliegende Erfindung betrifft eine Vorrichtung, z.B. eine Walzenpresse, mit zwei zumindest im Wesentlichen parallel zueinander angeordneten, drehbaren Wellen mit zugehörigen Drehachsen, deren Abstand voneinander verstellbar ist, wobei die Wellen sich jeweils durch eine Wand erstrecken, welche eine Antriebsseite von einer Produktseite trennt, und gegenüber der Wand abgedichtet sind.

Vorrichtungen mit zwei zueinander parallel angeordneten Wellen kommen in der produzierenden und verarbeitenden Industrie häufig zum Einsatz. Oftmals ist es dabei wichtig, eine Antriebsseite einer solchen Doppelwellenanordnung so von einer Produktseite derselben Anordnung zu trennen, dass keinerlei Verschmutzung von der Antriebsseite auf die Produktseite gelangen kann und dass keine Leckage von Produkt zur Antriebsseite hin auftreten kann. Wenn der Abstand der Drehachsen verstellbar ist, muss die Abdichtung zwischen der Antriebsseite und der Produktseite eine gute Abdichtung auch bei verstelltem Abstand der Drehachsen gewährleisten. Üblicherweise werden in solchen Fällen radial elastische dynamische Dichtungen eingesetzt, d.h. an zumindest einer Dichtfläche tritt bei sich drehenden Wellen eine ständige Relativbewegung zwischen der abzudichtenden Fläche und der Dichtung auf. Dies führt zu einem stärkeren Dichtungsverschleiß und erhöht zudem die Wahrscheinlichkeit, dass unerwünschter Abrieb in das zu verarbeitende Produkt gelangt.

US-A-3280426 offenbart eine Pelletpresse gemäß dem Oberbegriff des Anspruchs 1, mit drei parallel angeordneten Wellen,
deren Abstand zueinander teilweise verstellbar ist. Auf der Produktseite der Pelletpresse sind Walzkörper angeordnet, die dazu vorgesehen sind, die Pellets zu verarbeiten. An der Produktseite ist eine Dichteinheit angeordnet zur Abdichtung gegenüber der Antriebsseite.

FR-A-2336613 offenbart eine Welle und ein Maschinengehäuse, wobei eine Dichteinheit zwischen der Welle und dem Maschinengehäuse angeordnet ist, um den Maschineninnenraum gegen die Atmosphäre abzudichten. Hierzu werden Dichtlippen und eine Membran verwendet, die an der Maschineninnenraumseite angeordnet und befestigt sind.

### GEAENDERTES BLATT

Eine typische Doppelwellenanordnung ist beispielsweise eine Walzenpresse mit zwei parallel zueinander angeordneten, drehbaren Walzen, die zwischen sich einen Walzenspalt bilden, durch den im Betrieb zu verarbeitendes Material geführt wird. Solche Walzenpressen können z.B. zum Granulieren feiner Pulver verwendet werden, um die nachfolgende Verarbeitung des Pulvers zu vereinfachen. Walzenpressen dieser Art werden auch als Kompaktor^{®} bezeichnet.

Der Erfindung liegt die Aufgabe zugrunde, bei Vorrichtungen der genannten Art die Abdichtung zwischen der Antriebsseite und der Produktseite dahingehend zu verbessern, dass trotz eines verstellbaren Drehachsenabstandes über eine sehr lange Betriebsdauer eine hervorragende Abdichtung aufrechterhalten werden kann und zugleich eine Kontaminierung des Produkts mit Fremdmaterial so weit wie möglich vermieden ist.

Diese Aufgabe wird von einer eingangs genannten Vorrichtung gemäß Anspruch 1 gelöst.

Erfindungsgemäß wird somit die Abdichtung von einer Dichtungseinheit übernommen, die einen starren, die abzudichtende Welle konzentrisch umgebenden Grundkörper aufweist, der sich relativ zur Mittelachse der Welle nicht bewegt, bei einer Verstellung der Drehachse dieser Welle die Verstellbewegung also mitmacht. An diesem starren Grundkörper ist radial innen eine dynamische Dichtung befestigt, deren Betriebsbedingungen sich bei einer Verstellung der Drehachse nicht ändern, da die dynamische Dichtung von einer Drehachsenverstellung nichts mitbekommt. Diese dynamische Dichtung kann demnach auf die eigentliche Wellenabdichtung optimiert sein und muss keinerlei Achsversatz, Radialversatz und/oder Fluchtungsfehler zwischen den Drehachsen kompensieren, wozu es insbesondere bei einer Verstellung der Drehachsen verstärkt kommen kann. Diese Kompensation übernimmt vielmehr die radial außen an dem starren Grundkörper angebrachte statische Manschettendichtung, die keinerlei Verschleiß durch eine drehende Relativbewegung ausgesetzt ist und deshalb eine extrem hohe Standzeit aufweist. Die Art der elastischen Dichtmanschette wird so gewählt, dass sie den gewünschten Verstellbereich tolerieren kann, ohne übermäßig belastet zu werden. Bei kleineren Verstellabständen kann die elastische Dichtmanschette beispielsweise nach Art einer Flachmembran ausgebildet sein, bei größeren Verstellabständen hingegen bietet sich eine balgförmige Ausbildung der elastischen Dichtmanschette an.

Bei bevorzugten Ausführungsformen der erfindungsgemäßen Vorrichtung weist die dynamische Dichtung zwei axial hintereinander angeordnete Dichtelemente auf, die vorzugsweise Radiallippendichtungen sind. Zwei axial hintereinander angeordnete Dichtelemente verbessern zum einen den Wirkungsgrad der Abdichtung und vermindern zum anderen den Dichtungsverschleiß, da die Anpresskraft jedes einzelnen Dichtelements geringer gewählt werden kann. Ein weiterer Vorteil einer solchen Anordnung ist, dass die vordere, dem zu verarbeitenden Material ausgesetzte Dichtung ausgewechselt werden kann, ohne dass eine Gefahr besteht, dass das Material zur Antriebsseite gelangt.

Wenn die Dichtelemente der dynamischen Dichtung als Radiallippendichtungen ausgebildet sind, dann ist eine axial innere der beiden Radiallippendichtungen vorzugsweise mittels eines Spannringes montiert, der in einer äußeren Umfangsnut der Radiallippendichtung ruht. Der Spannring hat vorzugsweise einen runden Querschnitt und sorgt dafür, dass die axial innere Radiallippendichtung sich in der Bohrung, in der sie aufgenommen ist, nicht bewegen kann, insbesondere nicht drehen kann. Der Spannring besteht aus einem geeigneten Elastomermaterial.

Eine axial äußere der beiden Radiallippendichtungen der dynamischen Dichtung ist vorzugsweise axial auf einem Haltering montiert, der in der den axial äußeren Radiallippendichtung aufnehmenden Bohrung angeordnet ist und die Radiallippendichtung radial auswärts etwas aufspreizt. Auf diese Weise wird die Radiallippendichtung zuverlässig in der Bohrung festgelegt und ein Drehen der Radiallippendichtung im Betrieb unterbunden. Der Haltering hat vorzugsweise einen T-förmigen Querschnitt und steckt mit seiner Basis in der Radiallippendichtung. Die beiden Querschenkel des T-förmigen Querschnitts können dann zur axialen Abstützung der axial äußeren Radiallippendichtung auf der axial inneren Radiallippendichtung dienen.

Insgesamt ist mit den zwei wie zuvor beschrieben montierten Radiallippendichtungen eine Festlegung derselben in der zugehörigen Bohrung ohne Schrauben oder ähnliche Elemente realisiert, was zum einen eine leichte Montage der Radiallippendichtungen durch einfaches Einschieben in die Bohrung ermöglicht und zum anderen potentiell verschmutzungsempfindliche Befestigungsstellen eliminiert.

Die statische Manschettendichtung weist bei einer bevorzugten Ausführungsform der erfindungsgemäßen Vorrichtung einen angenähert M-förmigen Querschnitt auf, mit zwei äußeren, dickeren Schenkeln, die zur Festlegung der Manschettendichtung an der Dichtungseinheit respektive an der Wand dienen, wobei sich zwischen den äußeren, dickeren Schenkeln die elastische Dichtmanschette erstreckt, die vorzugsweise einstückig mit den beiden äußeren Schenkeln verbunden ist. Zur Festlegung der statischen Manschettendichtung dient ein erster Druckring, der an einem Grundkörper der Dichtungseinheit befestigt ist und der einen radial inneren der beiden Schenkel der Manschettendichtung in sich aufnimmt, so dass eine Stirnseite des radial inneren Schenkels mittels des ersten Druckrings gegen den Grundkörper der Dichtungseinheit gepresst wird. In analoger Weise wird zur Festlegung des radial äußeren der beiden Schenkel der Manschettendichtung ein zweiter Druckring verwendet, der an der Wand befestigt ist und in dem der radial äußere Schenkel so aufgenommen ist, dass eine Stirnseite des radial äußeren Schenkels mittels des zweiten Druckrings gegen die Wand gepresst wird. Der erste und der zweite Druckring sind auf der Antriebsseite der Vorrichtung angeordnet, so dass auf der Produktseite nur die elastische Dichtmanschette dem Produkt ausgesetzt ist.

Ein derzeit bevorzugtes Ausführungsbeispiel einer erfindungsgemäßen Vorrichtung in Gestalt einer Walzenpresse wird im Folgenden anhand der beigefügten, schematischen Zeichnungen näher erläutert, in denen:
- Figur 1: eine räumliche Darstellung einer Walzenpresse mit der erfindungsgemäß verbesserten Abdichtung zwischen Produktraum und Antriebsseite ist,
- Figur 2: eine Frontansicht auf die Walzenpresse der Figur 1 von vorne ist,
- Figur 3: der Schnitt III-III aus Figur 2 ist, und
- Figur 4: eine vergrößerte Darstellung eines Teils der Figur 3 ist, die eine Dichtungseinheit im Detail zeigt.

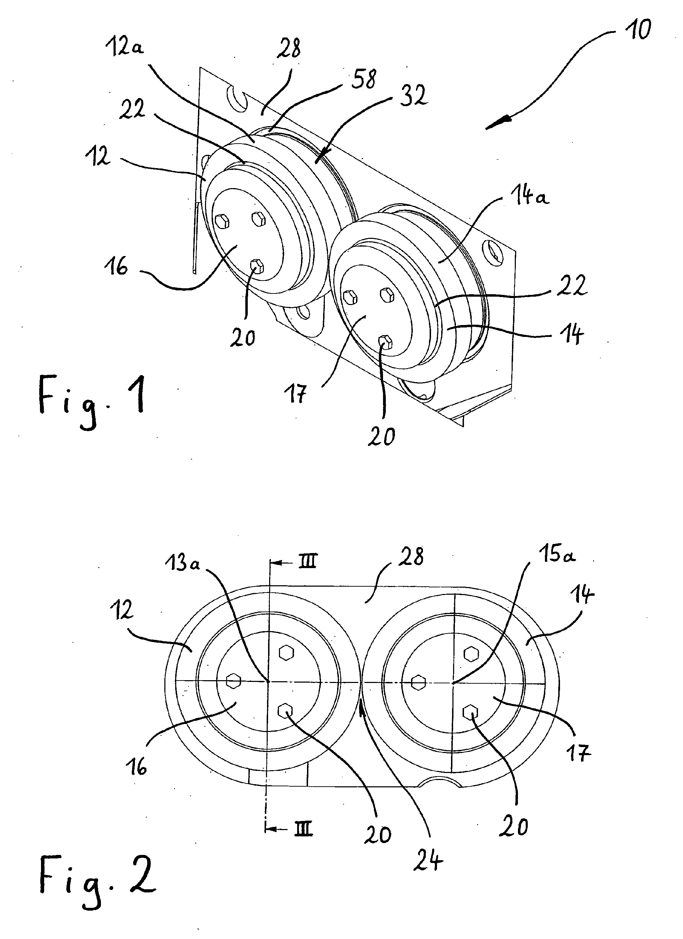

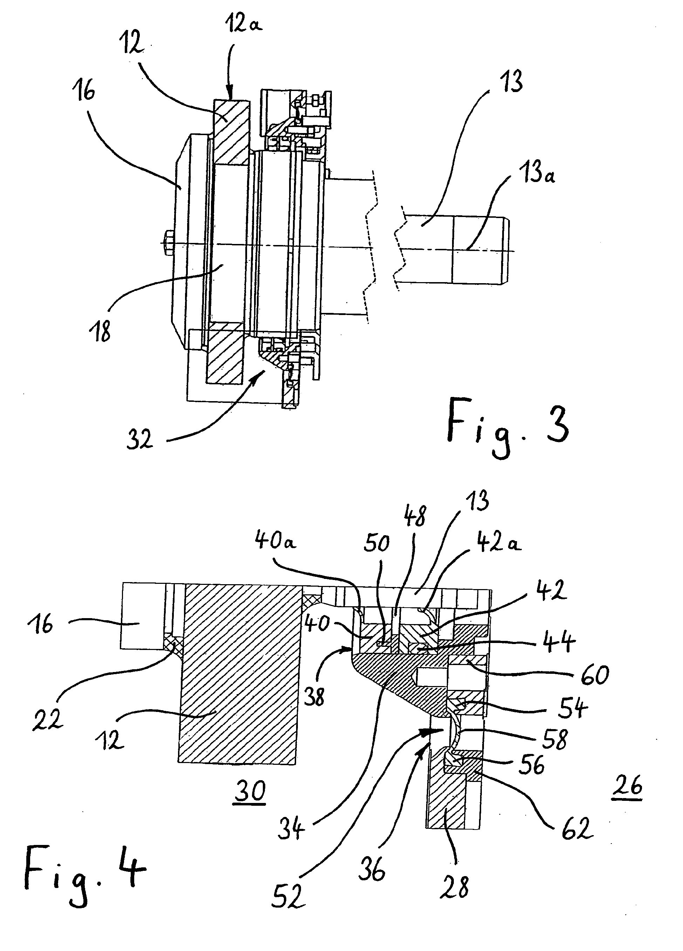

In den Figuren ist eine allgemein mit 10 bezeichnete Walzenpresse zur Verwendung als Kompaktor® beispielsweise in der pharmazeutischen Industrie dargestellt. Die Walzenpresse 10 weist eine erste Walze 12 und eine zweite Walze 14 auf, die jeweils eine zylindrische Arbeitsfläche 12a und 14a haben und auf einer zugehörigen, ihrem Drehantrieb dienenden Welle befestigt sind, von denen eine Welle 13 in Fig. 3 gezeigt ist. Die beiden Antriebswellen legen zueinander parallele Drehachsen 13a, 15a fest (siehe Fig. 2), um die sich die Walzen 12, 14 im Betrieb gegenläufig drehen.

Jede Walze 12, 14 ist mittels eines zugehörigen Druckdeckels 16, 17 auf einem Abtriebsstummel 18 (siehe Fig. 3) der zugehörigen Welle befestigt. Jeder Druckdeckel 16, 17 ist im gezeigten Ausführungsbeispiel mittels dreier Schrauben 20 auf dem zugehörigen Abtriebsstummel 18 festgeschraubt und verspannt die zugehörige Walze 12 bzw. 14 axial auf der entsprechenden Welle. Zur Abdichtung zwischen dem Druckdeckel 16 bzw. 17 und der ihm zugewandten Stirnseite jeder Walze 12 bzw. 14 ist der Außenrand der der Walze zugewandten Seite des Druckdeckels 16 bzw. 17 durch eine statische Lippendichtung 22 gebildet. Diese Lippendichtung 22 ermöglicht eine spaltfreie und damit totraumfreie Abdichtung zwischen dem Druckdeckel 16 bzw. 17 und der Stirnseite der zugehörigen Walze 12 bzw. 14, die Produktablagerungen in diesem Bereich verhindert und gut zu reinigen ist.

Zwischen sich bilden die beiden Walzen 12, 14 im Bereich ihrer Arbeitsflächen 12a, 14a einen Walzenspalt 24 (siehe Fig. 2), dem pulverförmiges Material zugeführt werden kann, um es mittels der beim Durchlaufen des Walzenspalts 24 auftretenden Presswirkung zu granulieren. Damit das Ausmaß der Presswirkung im Walzenspalt 24 dem zu verarbeitenden Pulver und/oder Produkterfordernissen angepasst werden kann, kann der Abstand der beiden Drehachsen 13a, 15a voneinander im Betrieb verstellt werden. Im gezeigten Ausführungsbeispiel sind beide Drehachsen 13a, 15a mittels nicht gezeigter Einrichtungen verstellbar ausgebildet.

Jede den beiden Drehachsen 13a, 15a zugeordnete Welle (dargestellt ist nur die Welle 13) erstreckt sich von einer Antriebsseite 26 (siehe Fig. 4) durch eine Wand 28 zu einer Produktseite bzw. in einen Produktraum 30, in dem sich die beiden Walzen 12, 14 befinden. Auf der Antriebsseite 26 befinden sich hier nicht weiter dargestellte Einrichtungen zum Drehantrieb der beiden die Walzen 12, 14 tragenden Wellen.

Um eine einwandfreie Abdichtung zwischen der Antriebsseite 26 und der Produktseite 30 zu gewährleisten und einen Eintrag von Fremdpartikeln in den Produktraum 30 möglichst zu unterbinden, ist die Welle 13 im Bereich der Wand 28 konzentrisch von einer Dichtungseinheit 32 umgeben, die als tragendes Element einen starren Grundkörper 34 aufweist, dessen Außendurchmesser deutlich kleiner als der Durchmesser einer Durchgangsöffnung 36 in der Wand 28 ist, durch die sich die Welle 13 erstreckt. Diese Durchmesserdifferenz erlaubt es, die Drehachse 13a der Welle 13 innerhalb des durch die Durchmesserdifferenz gegebenen Freiraumes radial zu verlagern und damit den Abstand zwischen den beiden Drehachsen 13a und 15a zu verändern. Der starre Grundkörper 34 der Dichtungseinheit 32 ist relativ zur Welle 13 fixiert, d.h. er verändert seine Relativposition zur Drehachse 13a bei einer Verstellung der Drehachse 13a nicht. Zur Produktseite 30 hin ist der starre Grundkörper 34 konisch verjüngend ausgebildet, um eine Produktablagerung auf seiner Außenseite zu erschweren.

Der starre Grundkörper 34 hat eine zur Produktseite 30 hin offene, zur Drehachse 13a konzentrische Bohrung 38, in der axial hintereinander zwei Radiallippendichtungen 40 und 42 montiert sind, die als dynamische Wellenabdichtungen fungieren und hierzu an ihrer radial inneren Seite jeweils mit einer umlaufenden Dichtlippe 40a, 42a versehen sind, welche die Außenseite der Welle 13 kontaktieren. Die Dichtlippen 40a, 42a sind im Querschnitt gesehen so gebogen, dass zu den Radiallippendichtungen 40, 42 gelangendes Produkt von der Oberfläche der Welle 13 abgewiesen wird.

Die axial innere Radiallippendichtung 42 ist in der Bohrung 38 mittels eines Spannringes 44 montiert, der in einer äußeren Umfangsnut 46 der Radiallippendichtung 42 aufgenommen ist. Der Spannring 46 hält die Radiallippendichtung 42 in der Bohrung 38 an Ort und Stelle fest und verhindert, dass bei sich drehender Welle 13 die Radiallippendichtung 42 sich ebenfalls dreht. Wie dargestellt, liegt die Radiallippendichtung 42 mit ihrem nahezu quadratischen Querschnitt am Grund der Bohrung 38 an.

Die axial äußere Radiallippendichtung 40 mit ihrem ebenfalls nahezu quadratischen Querschnitt stützt sich über einen in der Bohrung 38 aufgenommenen Haltering 48 mit T-förmigem Querschnitt an der axial inneren Radiallippendichtung 42 ab. Eine Basis 50 des T-förmigen Querschnitts des Halterings 48 ist vollständig in der bezüglich der Bohrung 38 inneren Stirnseite der Radiallippendichtung 40 aufgenommen, wobei die Basis 50 breiter ist als der entsprechende, in der Radiallippendichtung 40 vorgesehene Aufnahmeschlitz, so dass bei auf dem Haltering 48 montierter Radiallippendichtung 40 aufgrund des Übermaßes der Basis 50 ein Aufspreizeffekt zur Wirkung kommt, der den im Querschnitt näherungsweise quadratischen Grundkörper der Radiallippendichtung 40 radial auswärts aufspreizt und dadurch in der Bohrung 38 festklemmt. Eine Verlagerung oder ein Drehen der Radiallippendichtung 40 im Betrieb wird auf diese Weise ausgeschlossen.

Zur Abdichtung des aufgrund der genannten Durchmesserdifferenz zwischen dem starren Grundkörper 34 und der Durchgangsöffnung 36 in der Wand 28 bestehenden Ringspaltes dient eine statische Manschettendichtung 52, die im gezeigten Ausführungsbeispiel einen näherungsweise M-förmigen Querschnitt aufweist, der durch zwei äußere, verhältnismäßig dicke Schenkel 54, 56 und eine sich zwischen diesen Schenkeln erstreckende, den Freiraum zwischen ihnen überspannende, dünnere elastische Dichtmanschette 58 gebildet ist. Der radial innere Schenkel 54 dient zur Festlegung der Manschettendichtung 52 an der Dichtungseinheit 32 und ist hierzu nahezu vollständig in einem ersten Druckring 60 aufgenommen, der mittels nicht dargestellter Schrauben an der antriebsseitigen Stirnseite des starren Grundkörpers 34 befestigt ist und die freie Stirnseite des Schenkels 54 abdichtend gegen den Grundkörper 34 presst. In analoger Weise dient der Schenkel 56 zur Festlegung der Manschettendichtung 52 an der Wand 28 und ist hierzu ebenfalls nahezu vollständig in einem zweiten Druckring 62 aufgenommen, der an der Wand 28 befestigt ist und die freie Stirnseite des Schenkels 56 gegen die Wand 28 presst.

Sowohl der erste Druckring 60 als auch der zweite Druckring 62 sind somit auf der Antriebsseite 26 angeordnet, wodurch ein zu verarbeitendes Produkt nur mit der elastischen Dichtmanschette 58 in Berührung kommen kann. Die elastische Dichtmanschette 58 ist dazu in der Lage, sich entsprechend der Verstellbewegung der Drehachse 13a zu verformen, ohne dabei zu reißen oder übermäßig auf Spannung oder Druck belastet zu werden. Sowohl die statische Manschettendichtung 52 als auch die Radiallippendichtungen 40 und 42 bestehen aus einem Elastomermaterial, welches eine ausreichende Beständigkeit gegenüber dem zu verarbeitenden Produkt aufweist und mechanisch ausreichend stabil ist. Geeignete Materialien sind dem Fachmann bekannt und werden deshalb hier nicht näher erläutert.

## Patentansprüche

1. Vorrichtung, insbesondere Walzenpresse (10), mit zwei zumindest im Wesentlichen parallel zueinander angeordneten, drehbaren Wellen mit zugehörigen Drehachsen (13a, 15a), deren Abstand voneinander verstellbar ist, wobei die Wellen sich jeweils durch eine Wand (28) erstrecken, welche eine Antriebsseite von einer Produktseite trennt, und gegenüber der Wand (28) abgedichtet sind,
wobei
- die Abdichtung zwischen jeder Welle (13) mit verstellbarer Drehachse und der Wand (28) mittels einer die zugehörige Welle (13) im Bereich der Wand (28) umgebenden Dichtungseinheit (32) erfolgt, die bei einer Verstellung der Drehachse ihre Relativposition zu dieser Drehachse beibehält, **dadurch gekennzeichnet, dass**
- die Dichtungseinheit (32) radial innen eine dynamische Dichtung zur Abdichtung zwischen der drehbaren Welle (13) und der Dichtungseinheit (32) aufweist und radial außen eine statische Manschettendichtung (52) aufweist, die radial innen an der Dichtungseinheit (32) und radial außen an der Wand (28) abdichtend festgelegt ist und eine elastische Dichtmanschette (58) umfasst,
wobei die statische Manschettendichtung (52) einen radial inneren Schenkel (54) aufweist, der in einem ersten Druckring (60) aufgenommen ist, der an einem Grundkörper (34) der Dichtungseinheit (32) befestigt ist, so dass eine Stirnseite des radial inneren Schenkels (54) mittels des ersten Druckrings (60) gegen den Grundkörper (34) der Dichtungseinheit (32) gepresst ist, und einen radial äußeren Schenkel (56) aufweist, der in einem zweiten Druckring (62) aufgenommen ist, der an der Wand (28) befestigt ist, wobei der erste Druckring (60) und der zweite Druckring (62) auf der Antriebsseite (26) der Vorrichtung angeordnet sind, so dass auf der Produktseite nur die elastische Dichtmanschette (58) dem Produkt ausgesetzt ist.

2. Vorrichtung nach Anspruch 1,
**dadurch gekennzeichnet, dass** die dynamische Dichtung zwei axial hintereinander angeordnete Dichtelemente aufweist.

3. Vorrichtung nach Anspruch 1 oder 2,
**dadurch gekennzeichnet, dass** die Dichtelemente Radiallippendichtungen (40, 42) sind.

4. Vorrichtung nach Anspruch 3,
**dadurch gekennzeichnet, dass** eine axial äußere der beiden Radiallippendichtungen (40, 42) axial auf einem Haltering (48) montiert ist, der die Radiallippendichtung (40) radial auswärts aufspreizt.

5. Vorrichtung nach Anspruch 4,
**dadurch gekennzeichnet, dass** der Haltering (48) einen T-förmigen Querschnitt hat und mit seiner Basis (50) in der Radiallippendichtung (40) steckt.

6. Vorrichtung nach einem der Ansprüche 2 bis 5,
**dadurch gekennzeichnet, dass** eine axial innere der beiden Radiallippendichtungen (40, 42) mittels eines Spannringes (44) montiert ist, der in einer äußeren Umfangsnut (46) der Radiallippendichtung (42) ruht.

7. Vorrichtung nach Anspruch 6,
**dadurch gekennzeichnet, dass** der Spannring (44) einen runden Querschnitt hat.

8. Vorrichtung nach einem der vorhergehenden Ansprüche,
**dadurch gekennzeichnet, dass** die statische Manschettendichtung (52) einen angenähert M-förmigen Querschnitt aufweist, mit zwei äußeren, dickeren Schenkeln (54, 56), die zur Festlegung der Manschettendichtung (52) an der Dichtungseinheit (32) und an der Wand (28) dienen, zwischen denen sich die elastische Dichtmanschette (58) erstreckt.

## Claims

1. Apparatus, in particular a roller press (10), having two rotatable shafts which are arranged at least substantially parallel to one another and have associated rotational axes (13a, 15a) whereof the mutual spacing is adjustable, wherein the shafts each extend through a wall (28) which separates a drive side from a product side and are sealed with respect to the wall (28),
wherein
- the sealing between each shaft (13) having the adjustable rotational axis and the wall (28) is effected by means of a sealing unit (32) which surrounds the associated shaft (13) in the region of the wall (28) and maintains its relative position to the rotational axis when this rotational axis is adjusted, **characterized in that**
- the sealing unit (32) comprises, radially inwards, a dynamic seal for sealing between the rotatable shaft (13) and the sealing unit (32) and, radially outwards, a static collar seal (52) which is fixed in sealing manner radially inwards on the sealing unit (32) and radially outwards on the wall (28) and comprises an elastic sealing collar (58),
wherein the static collar seal (52) has a radially inner limb (54) which is received in a first pressure ring (60) which is secured on a base body (34) of the sealing unit (32) so that an end face of the radially inner limb (54) is pressed against the base body (34) of the sealing unit (32) by means of the first pressure ring (60), and has a radially outer limb (56) which is received in a second pressure ring (62) which is secured on the wall (28), wherein the first pressure ring (60) and the second pressure ring (62) are arranged on the drive side (26) of the device so that only the elastic sealing collar (58) is exposed to the product on the product side.

2. Apparatus according to Claim 1,
**characterized in that** the dynamic seal has two sealing elements arranged axially in succession.

3. Apparatus according to Claim 1 or 2,
**characterized in that** the sealing elements are radial lip seals (40, 42).

4. Apparatus according to Claim 3,
**characterized in that** an axially outer one of the two radial lip seals (40, 42) is mounted axially on a retainer ring (48) which spreads the radial lip seal (40) radially outwards.

5. Apparatus according to Claim 4,
**characterized in that** the retainer ring (48) has a T-shaped cross-section and is inserted with its base (50) in the radial lip seal (40).

6. Apparatus according to one of Claims 2 to 5,
**characterized in that** an axially inner one of the two radial lip seals (40, 42) is mounted by means of a clamping ring (44) which rests in an outer circumferential groove (46) of the radial lip seal (42).

7. Apparatus according to Claim 6,
**characterized in that** the clamping ring (44) has a circular cross-section.

8. Apparatus according to one of the preceding claims,
**characterized in that** the static collar seal (52) has an approximately M-shaped cross-section with two outer, thicker limbs (54, 56) which serve to fix the collar seal (52) on the sealing unit (32) and on the wall (28), between which the elastic sealing collar (58) extends.

## Revendications

1. Dispositif, plus particulièrement une presse à rouleaux (10), comprenant deux arbres rotatifs disposés au moins sensiblement parallèlement l'un par rapport à l'autre et associés à des axes de rotation (13a, 15a) situés à une distance réglable, ces arbres traversant respectivement une paroi (28) qui sépare un côté entraînement d'un côté produit, et étant rendus étanches par rapport à la paroi (28),
- l'étanchéité entre chaque arbre (13) doté d'un axe de rotation réglable et la paroi (28) étant assurée par une unité d'étanchéité (32) qui entoure l'arbre (13) correspondant dans la zone de la paroi (28) et qui, lors d'un déplacement de l'axe de rotation, conserve sa position relative par rapport audit axe de rotation, **caractérisé en ce que**
- l'unité d'étanchéité (32) présente radialement vers l'intérieur un joint dynamique aux fins d'étanchéité entre l'arbre rotatif (13) et l'unité d'étanchéité (32), et radialement vers l'extérieur un joint d'étanchéité à manchette (52) statique qui est fixé radialement vers l'intérieur de manière étanche à l'unité d'étanchéité (32) et radialement vers l'extérieur à la paroi (28), et qui comprend une manchette d'étanchéité (58) élastique,
ledit joint à manchette (52) statique présentant une branche (54) radialement intérieure qui est logée dans un premier anneau de compression (60), lequel est fixé à un corps de base (34) de l'unité d'étanchéité (32) de telle sorte qu'une face terminale de la branche (54) radialement intérieure est pressée contre ledit corps de base (34) de l'unité d'étanchéité (32) au moyen du premier anneau de compression (60), et présentant une branche (56) radialement extérieure qui est logée dans un deuxième anneau de compression (62), lequel est fixé à la paroi (28), le premier (60) et le deuxième anneau de compression (62) étant disposés du côté entraînement (26) du dispositif de telle sorte que seule la manchette d'étanchéité (58) élastique se trouve exposée au produit du côté produit.

2. Dispositif selon la revendication 1,
**caractérisé en ce que** le joint d'étanchéité dynamique présente deux éléments d'étanchéité disposés axialement l'un derrière l'autre.

3. Dispositif selon la revendication 1 ou 2,
**caractérisé en ce que** les éléments d'étanchéité sont des joints à lèvres radiales (40, 42).

4. Dispositif selon la revendication 3,
**caractérisé en ce qu'**un des deux joints à lèvres radiales (40, 42), axialement extérieur, est monté axialement sur une bague de support (48) qui fait s'écarter radialement vers l'extérieur le joint à lèvres radiales (40).

5. Dispositif selon la revendication 4,
**caractérisé en ce que** la bague de support (48) possède une section en forme de T et est insérée par sa base dans le joint à lèvres radiales (40).

6. Dispositif selon l'une des revendications 2 à 5,
**caractérisé en ce qu'**un des deux joints à lèvres radiales (40, 42), axialement intérieur, est monté à l'aide d'une bague de serrage (44) qui repose dans une gorge circonférentielle (46) extérieure du joint à lèvres radiales (42).

7. Dispositif selon la revendication 6,
**caractérisé en ce que** la bague de serrage (44) possède une section circulaire.

8. Dispositif selon l'une des revendications précédentes,
**caractérisé en ce que** le joint à manchette (52) statique présente une section sensiblement en forme de M et est doté de deux branches extérieures plus épaisses (54, 56) qui servent à fixer le joint à manchette (52) à l'unité d'étanchéité (32) et à la paroi (28), entre lesquelles s'étend la manchette d'étanchéité (58) élastique.
